# EUROPÄISCHE PATENTSCHRIFT

(11) **EP 0 444 228 B1**
(45) Veröffentlichungstag und Bekanntmachung des Hinweises auf die Patenterteilung: **17.05.1995**
(21) Anmeldenummer: 90103887.7
(22) Anmeldetag: 28.02.1990
(51) Int. Cl.: B29C 31/00, B29C 49/42, B29C 49/68

(54) **Vorrichtung zum Herstellen von Formteilen**
Apparatus for moulding preforms
Dispositif de moulage des pièces préformées

(43) Veröffentlichungstag der Anmeldung: 04.09.1991
(73) Patentinhaber: NISSEI ASB MACHINE CO., LTD., Nagano-ken 384 (JP)
(72) Erfinder: Voss, Hermann, D-2000 Hamburg 20 (DE)
(74) Vertreter: Weber, Otto Ernst, Dipl.-Phys.

(56) Entgegenhaltungen:
- EP-A- 0 001 626
- WO-A-90/03868
- DE-A- 2 510 591
- DE-A- 3 817 633
- FR-A- 2 196 236
- FR-A- 2 327 062
- FR-A- 2 445 207
- US-A- 2 045 390
- US-A- 4 234 297
- US-A- 4 290 745

## Beschreibung

Die Erfindung betrifft eine Vorrichtung zum Herstellen von Formteilen mit einer einen thermoplastischen Vorformling aufheizenden Heizung, einer die Verformung des Vorformlings vornehmenden Form sowie einer den Vorformling zu der Heizung und dieser zur Form transportierenden Transporteinrichtung, die als ein in seinem Mittelpunkt drehbar gelagertes Rad ausgebildet ist, auf dem eine den Vorformling ergreifende Kupplung befestigt ist und sowohl die Heizung als auch die Form auf einem von der Kupplung durchmessenden Weg angeordnet sind, auf dem die Kupplung sowohl den Vorformling bis zur Form als auch das fertige Formteil von der Form bis zu einer es aufnehmenden Ausgabestelle führt.

Derartige Vorrichtungen (US-PS 4,290,745) besitzen ein mittels eines Maltheserantriebs schrittweise bewegtes Rad, wobei die den Vorformling ergreifende Kupplung drehbar an dem Rad, jedoch in Umfangsrichtung des Rades unbeweglich angeordnet ist. Auf dem von der Kupplung durchmessenden Weg sind relativ zum Rad unbeweglich die Heizung und die die Verformung des Vorformlings vornehmende Form vorgesehen. Bei dieser Vorrichtung ist die Konstruktion des Antriebs des Rades als auch dessen Steuerung relativ aufwendig. Darüber hinaus sind diese Vorrichtungen hinsichtlich der von ihnen zu erwartenden Produktionsziffer nicht besonders leistungsfähig, da die schrittweise Fortbewegung des Heizrades die Produktionsgeschwindigkeit begrenzt.

Aufgabe der vorliegenden Erfindung ist es daher, eine Vorrichtung der einleitend genannten Art so zu verbessern, daß sie einerseits in der Herstellung relativ einfach und billig ist und andererseits eine höhere Produktionsrate ermöglicht.

Diese Aufgabe wird erfindungsgemäß dadurch gelöst, daß das Rad auf eine gleichbleibende Umfangsgeschwindigkeit gesteuert ist.

Eine derartige Vorrichtung benötigt keinen aufwendigen Antrieb für eine schrittweise Bewegung des Rades, so daß eine kontinuierliche Arbeitsweise der Vorrichtung möglich ist. Wie bei der bekannten Vorrichtung sind die Heizung als auch die Formen ortsfest und können daher auf konventionelle Weise mit Energie und Druckluft versorgt werden. Darüber hinaus können auch konventionelle Steuersysteme angewendet werden, um den zu verformenden Vorformling an einer Abgabestelle von einer mit dem Rad verbundenen Kupplung ergreifen zu lassen. Schließlich reichen auch konventionelle Steuerungen sowohl für die Heizung als auch für die Form aus, um zu erreichen, daß der Vorformling während seines Durchlaufs durch die Heizung einerseits und durch die Form andererseits so behandelt wird, daß das entstehende Formteil den Bedingungen genügt, die von ihm erwartet werden.

Vorteilhafte Ausgestaltungen der Erfindung ergeben sich aus den Unteransprüchen.

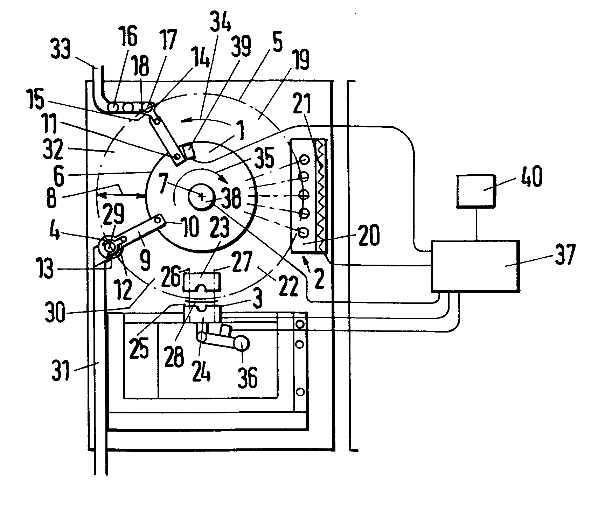

Weitere Einzelheiten der Erfindung ergeben sich aus der nachfolgenden ausführlichen Beschreibung und der beigefügten Zeichnung, in der eine bevorzugte Ausführungsform der Erfindung beispielsweise veranschaulicht ist.

In der Zeichnung ist eine Draufsicht auf eine Vorrichtung schematisch dargestellt.

Eine Vorrichtung besteht im wesentlichen aus einem Heizrad (1), einer Heizung (2),einer Form (3) und einer Ausgabestelle (4). Die Heizung (2), die Form (3) und die Ausgabestelle (4) sind auf einer Kreislinie (5) angeordnet, die konzentrisch zum Umfang (6) des Heizrades (1) verläuft. Dieses ist um seinen Mittelpunkt (7) drehbar gelagert. Zwischen der Kreislinie (5), die sich außerhalb des Heizrades (1) erstreckt und dem Umfang (6) des Heizrades (1) erstreckt sich ein Abstand (8), der in etwa der Länge einer Halterung (9) entspricht, die mit ihrem einen Ende (10) auf dem Heizrad (1) um einen Schwenkpunkt (11) verschwenkbar gelagert ist und an ihrem anderen Ende (12) eine Kupplung (13) trägt, die im wesentlichen aus zwei aufeinander zu beweglichen Kupplungsklauen (14,15) besteht. Die Kupplungsklauen (14, 15) werden im wesentlichen auf der Kreislinie (5) geführt, wenn das Heizrad sich um seinen Mittelpunkt (7) dreht.

Die Kupplung (13) ist so bemessen, daß sie einen in der Form (3) zu verformenden Vorformling (16) ergreifen und auf der Kreislinie (5) führen kann. Zu diesem Zwecke kann der Vorformling (16) eine für den Angriff der Kupplungsklauen (14, 15) besonders geeignete Stelle, beispielsweise eine entsprechende Halsausbildung, aufweisen.

Der Vorformling (16) wird an einer Übergabestation (17) an die Kupplung (13) abgegeben. Die Übergabestation (17) ist auf der Kreislinie (5) an einer Übergabestelle (18) angeordnet, zwischen der und der Heizung (2) ein erster Bereich (19) liegt, der einem Verschwenkwinkel des Heizrades (1) von etwa 90 Grad entspricht. Am Ende dieses ersten Bereiches tritt der von der Kupplung (13) geführte Vorformling (16) in die Heizung (2) ein.

Innerhalb der Heizung (2) durchläjft die Kupplung (13) einen Heizungspfad (20), auf dem der zu erwärmende Vorformling (16) an Heizelementen (21) vorbeigeführt wird, die ihn auf eine vorgegebene Temperatur erhitzt. Diese Temperatur ist so bemessen, daß der Vorformling (16) nach Durchmessen eines zwischen der Heizung (2) und der Form (3) liegenden zweiten Bereiches (22) in der Form (3) eine Temperatur besitzt, bei der ein thermoplastischer Kunststoff, aus dem der Vorformling (16) besteht, im gewünschen Umfange verformt werden kann. Dabei verläuft der Heizpfad (20) im wesentlichen auf der Kreislinie (5) , entlang der die Heizelemente (21) angeordnet sind. Dabei ist bei der Anordnung der Heizelemente (21) bezüglich des Heizpfades (20) ein Abstand eingehalten, bei dem einerseits für eine gute Durchwärmung des Vorformlings gesorgt ist und andererseits die im Vorformling (16) entstehende Temperatur nicht so hoch ist, daß innerhalb des thermoplastischen Kunststoffes qualitätsverändernde Umsetzungen stattfinden. Während des gesamten Transportes des Vorformlings (16) auf der Kreislinie (5) behält der Vorformling (16) seine Lage bezüglich der Kupplung (13) im wesentlichen bei, d.h. er verläuft mit seiner Längsachse senkrecht zur Längsachse der Halterung (9) im wesentlichen parallel zu einer sich durch den Mittelpunkt (7) erstreckenden Drehachse des Heizrades (1).

In dieser Lage verläßt der Vorformling (16) die Heizung (2) im aufgewärmten Zustand. Nach Durchmessen des zweiten Bereiches (22), der in etwa einem Drehwinkel des Heizrades (1) etwa von 60 Grad entspricht, tritt der Vorformling in die Form (3) ein, die im wesentlichen im Bereich der Kreislinie (5) angeordnet ist. Die Form (3) besteht im wesentlichen aus zwei auf einander zu beweglichen Formhälften (23, 24), die gemeinsam einen Verformungsraum (25) umschließen, wenn die beiden Formhälöften (23, 24) sich gegenseitig beaufschlagen und damit die Form (3) schließen. Zweckmäßigerweise durchläuft die Kreislinie (5) den Verformungsraum (25), so daß innerhalb der Form (3) eine Auslenkung des zu verformenden Vorformling (16) aus der Kreislinie (5) nicht stattfinden muß. Zu diesem Zwecke bewegen sich die Formhälften (23, 24) auf einander parallel verlaufenden Verschiebewegen (26, 27), die in etwa senkrecht auf einer an die Kreislinie (5) gelegten Tangente (28) stehen, die im Schnittpunkt einer durch den Verformungsraum (25) verlaufenden Mittellinie mit der Kreislinie (5) an diese gelegt ist.

Nach der Verformung des Vorformlings (16) innerhalb der Form (3) öffnet sich diese durch eine Verschiebung der Formhälften (23, 24) längs den Verschiebewegen (26, 27), so daß ein innerhalb der Form (3) entstandenes Formteil (29) auf der Kreislinie (5) aus der geöffneten Form (3) herausgeführt werden kann. Dabei wird das Formteil (29) von der Kupplung (13) gehalten, die nach Durchmessen eines dritten Bereiches (30) in den Bereich der Ausgabestelle (4) gelangt. Die Größe des dritten Bereiches (3) entspricht einem Drehwinkel des Heizrades (1) von etwa 60 Grad. Während des Durchmessens dieses dritten Bereiches (30) kühlt das Formteil (29) so weitgehend ab, das es an der Ausgabestelle (4) von der Kupplung (13) gelöst und an ein Abführorgan (31) abgegeben werden kann.

Nachdem auf diese Weise die Kupplung (13) vom Formteil (29) entleert worden ist, wird sie entlang einem vierten Bereich (32) in Richtung auf die Übergabestation (17) gefördert. Dieser vierte Bereich (32) entspricht einem Schwenkwinkel des Heizrades (1) von etwa 100 Grad.

Die Steuerung des Heizrades (1) erfolgt in der Weise, daß für einen ordnungsgemäßen Tansport des Vorformling (16) bzw. des Formteils (29) gesorgt ist und darüber hinaus der Vorformling in der für seine Verformung notwendigen Weise behandelt werden kann. So kann beispielsweise das Heizrad (1) in den Bereichen der Übergabestation (17),der Heizung (2), der Form (3) und der Ausgabestelle (4) so verzögert werden, daß eine ordnungsgemäße Übergabe des Vorformlings (16) von einer Anlieferung (33) an die Kuppling (13) ohne weiteres möglich ist. Sodann könnte das Heizrad (1) zur Verkürzung des Produktionsprozesses im ersten Bereich (19) beschleunigt werden. Auf dem Heizpfad (20) wird die Umfangsgeschwindigkeit des Heizrades (1) so bemessen, daß eine ordnugnsgemäße Aufheizung des Vorformlings (16) gewährleistet ist und dieser mit einer vorgegebenen Temperatur die Heizung (2) verläßt.

Sodann könnte im zweiten Bereich (22) wiederum eine Beschleunigung des Heizrades (1) stattfinden. Sobald der zu verformende Vorformling (16) in die Form (3) eingetreten ist, muß das Heizrad (1) für eine zur Verformung des Vorformlings (16) notwendige Zeit angehalten werden, während der die Form (3) geschlossen wird und die Verformung des Vorformlings (16) stattfindet.

In dem sich an die Form (3) anschließenden dritten Bereich (30) erfolgt wiederum eine Beschleunigung des Heizrades (1) auf eine Geschwindigkeit, die eine ordnungsgemäße Übergabe des Formteils (29) an das Abführorgan (31) erlaubt. Schließlich könnte im vierten Bereich (32) das Heizrad (1) zunächst wieder beschleunigt, dann jedoch abgebremst werden auf eine Umfangsgeschwindigkeit , die eine problemlose Übergabe des Vorformlings (16) an die Kupplung (13) ermöglicht.

Diese Verzögerungen und Beschleunigungen des Heizrades (1) kosten jedoch nicht nur einen erheblichen Steueraufwand, sondern auch erhebliche Energien für die Abbremsung und Beschleunigung. Darüber hinaus tritt im Hinblick auf die ständigen Abbremsungen und Beschleunigungen ein erheblicher Verschleiß im Bereich des Heizrades (1) und seines Antriebes auf.

Aus diesem Grunde wird angestrebt, das Heizrad (1) mit einer gleichbleibenden Umfangsgeschwindigkeit zu betreiben. Um diese zu ermöglichen, können die Halterungen (9) relativ zum Heirad (1) um den Schwenkpunkt (11) verschwenkt werden. Dabei bedeutet eine Verschwenkung der Halterungen (9) in eine Gegenrichtung (34), die einer Drehrichtung (35) des Heizrades (1) entgegengesetzt , eine Verminderung der Umfangsgeschwindigkeit der auf der Kreislinie (5) geführten Kupplung (13), während eine Verschwenkung der Halterung (9) in Drehrichtung (5) des Heizrades (1) eine Vergrößerung der Umfangsgeschwindigkeit bedeutet.

Mit hilfe derartiger Relativbewegungen der Halterungen (9) bezüglich der Bewegung des Heizrades (1) können Umfangsgeschwindigkeiten für die Kupplung (13) dargestellt werden, die einen Betrieb des Heizrades (1) mit einer gleichbleibenden Drehzahl ermöglicht. So kann beispielsweise im Bereich der Übergabestation (17) eine Verschwenkung der Halterungen (9) in Gegenrichtung (34) solange erfolgen , bis ein zu verformender Vorformling (16) von der Kupplung (13) ergriffen worden ist. Sodann wird im ersten Bereich (19) die Halterung (9) in Drehrichtung (35) des Heizrades (1) verschwenkt, so daß der Vorformling (16)mit einer relativ großen Umfangsgeschwindigkeit in die Heizung (2) einmündet. Von dieser relativ großen Umfangsgeschwindigkeit kann die Kupplung innerhalb der Heizung (2) auf dem Heizungspfad (20) abgebremst werden, in dem die Halterung (9) in Gegenrichtung (34) verschwenkt wird. Dabei erfolgt eine Abstimmung hinsichtlich der Drehzahl des Heizrades (1) einerseits und einer Verschwenkgeschwindigkeit, mit der die Halterung (9) in Gegenrichtung (34) verschwenkt wird, in der Weise, daß für die Zeit, während der der Verformling (16) auf dem Heizungspfad (20) befördert wird, gerade groß genug ist, um bei einer vorgegebenen Heizenergie des Heizelementes (21) die Heizung (2) mit einer Temperatur verlassen zu können, die ausreichend ist, damit der Vorformling (16) nach Durchmessen des zweiten Bereiches (22) innerhalb der Form (3) im gewünschten Umfange verformt werden kann. Nachdem der Vorformling (16) die Heizung (2) verlassen hat, wird er im zweiten Bereich (22) durch Verschwenken der Halterung (9) in Drehrichtung (35) zunächst beschleunigt und dann im Bereich der Form (3) erheblich verzögert, so daß der Vorformling (16) innerhalb des Verformungsraumes (25) in Ruhe ist. Zu diesem Zwecke wird die Halterung (9) in Gegenrichtung (34) so verschwenkt, daß der Vorformling (16) innerhalb des Verformungsraumes (25) solange verharrt, daß in der Zwischenzeit die Form (3) geschlossen werden kann, die Verformung des Vorformlings (16) stattfindet und anschließend die Form (3) wieder geöffnet werden kann. Zu diesem Zwecke ist darüber hinaus eine Steuerung der Form (3) notwendig, die der kurzen Verweilzeit des Vorformlings (16) Rechnung trägt. Zu diesem Zwecke werden beispielsweise die Formhälften (23, 24) bereits beschleunigt, solange der Vorformling (16) noch sich aus dem zweiten Bereich (22) nähert bzw. der Verformungsvorgang soeben abgeschlossen ist. Darüber hinaus wird auch die Bereitstellung von Druckluft über eine Zuführung (36) so eingeleitet, daß im Augenblick des Verschlusses der Form (3) der gesamte zur Verformung des Verformlings (16) notwendige Luftdruck zur Verfügung steht.

Nachdem die Verformung des Vorformlings (16) stattgefunden hat, wird das formteil (29) der sich öffnenden Form (3) entnommen. Während seiner Förderung durch den dritten Bereich (30) kann ein Verschwenken der Halterung (9) in Drehrichtung (35) vorgenommen werden, so daß mindestens in einem der Form (3) benachbarten vorderen Teil des dritten Bereiches (30) das Formteil (29) eine hohe Geschwindigkeit besitzt. Diese kann in einem zweiten Teil des dritten Bereiches (30) wieder soweit durch ein entsprechendes Schwenken der Halterung (9) abgebremst werden, daß eine problemlose Übergabe des Formteils (29) im Bereich der Ausgabestelle (4) an das Abführorgan (31) möglich ist.

Die Bewegungen des Heizrades (1) einerseits und der Halterung (9) andererseits können von einer Steuerung (37) vorgenommen werden, die einerseits mit einem Antrieb (38) des Heizrades (1) verbunden ist und andererseits mit Schwenkantrieben (39), die eine Verschwenkung der Halterungen (9) gegenüber dem Heizrad (1) durchführen. Diese Steuerung (37) kann beispielsweise mit einem Mikroprozessor (40) verbunden sein, in den die genauen Verweilzeiten eingegeben werden während der sich der Vorformling (16) innerhalb der einzelnen Bewegungsphasen des Heizrades (1) aufhält, Darüber hinaus kann von der Steuerung (37) auch die Heizleistung der Heizung (2) vorgegeben werden und die Steuerung der Funktionen, die im Bereich der Form (3) auszuführen sind. Dazu gehören die Bewegungen der Formhälften (23, 24) und die Steuerung der in die Form (3) eingeleiteten Druckluft hinsichtlich ihrer zeitlichen Phasen und hinsichtlich ihres Druckverhaltens.

## Patentansprüche

1. Vorrichtung zum Herstellen von Formteilen mit einer einen thermoplastischen Vorformling aufheizenden Heizung, einer die Verformung des Vorformlings vornehmenden Form sowie einer den Vorformling zu der Heizung und dieser zur Form transportierenden Transporteinrichtung, die als ein in seinem Mittelpunkt (7) drehbar gelagertes Rad (1) ausgebildet ist, auf dem eine den Vorformling (16) ergreifende Kupplung (13) befestigt ist und sowohl die Heizung (2) als auch die Form (3) auf einem von der Kupplung (13) durchmessenden Weg angeordnet sind, auf dem die Kupplung (13) sowohl den Vorformling (16) bis zur Form (3) als auch das fertige Formteil (29) von der Form (3) bis zu einer es aufnehmenden Ausgabestelle (4) führt, **dadurch gekennzeichnet**, daß das Rad (1) auf eine gleichbleibende Umfangsgeschwindigkeit gesteuert ist.

2. Vorrichtung nach Anspruch 1, **dadurch gekennzeichnet**, daß die Kupplung (13) beweglich auf dem Rad (1) angeordnet ist.

3. Vorrichtung nach Anspruch 1 oder 2, **dadurch gekennzeichnet**, daß die Kupplung (13) eine ihre Bewegungen gegenüber dem Rad (1) steuernde Steuerung (37) aufweist.

4. Vorrichtung nach Anspruch 2 und 3, **dadurch gekennzeichnet**, daß die Kupplung (13) je nach durchlaufender Bearbeitungsphase gegenüber dem Rad (1) vor- bzw. nacheilt.

5. Vorrichtung nach Anspruch 2 bis 4, **dadurch gekennzeichnet**, daß die Kupplung (13) im Bereich der Heizung (2) gegenüber dem Rad (1) nacheilt.

6. Vorrichtung nach Anspruch 2 bis 5, **dadurch gekennzeichnet**, daß die Kupplung (13) in einem zwischen der Heizung (2) und der Form (3) liegenden Bereich (22) voreilt.

7. Vorrichtung nach Anspruch 2 bis 6, **dadurch gekennzeichnet**, daß die Kupplung (13) im Bereich der Form (3) gegenüber dem Rad (1) nacheilt.

8. Vorrichtung nach Anspruch 2 bis 7, **dadurch gekennzeichnet**, daß die Kupplung (13) in einem zwischen der Form (3) und der Ausgabestelle (4) liegenden Bereich (30) gegenüber dem Rad (1) voreilt.

9. Vorrichtung nach Anspruch 1 bis 8, **dadurch gekennzeichnet**, daß die Kupplung (13) in einem Bereich einer den Vorformling (16) an die Kupplung (13) abgebenden Übergabestation (17) mit einer dem Rad (1) angepaßten Umfangsgeschwindigkeit umläuft.

10. Vorrichtung nach Anspruch 2 bis 9, **dadurch gekennzeichnet**, daß die Kupplung (13) in einem zwischen der Übergabestation (17) und der Heizung (2) liegenden Bereich (19) gegenüber dem Rad (1) voreilt.

11. Vorrichtung nach Anspruch 1 bis 10, **dadurch gekennzeichnet**, daß in der Heizung (2) ein von dem Vorformling (16) durchlaufender Heizpfad (20) angeordnet ist, auf dem ein den Vorformling (16) selektiv erhitzender Wärmeübergang vorgesehen ist und an dessen Ende eine seine Verformung zulassende Temperatur des Vorformlings (16) erreicht.

12. Vorrichtung nach Anspruch 1 bis 11, **dadurch gekennzeichnet**, daß in der Form (3) während einer Verformung des Vorformlings (16) der Vorformling (16) in Ruhe ist.

13. Vorrichtung nach Anspruch 1 bis 12, **dadurch gekennzeichnet**, daß eine die Bewegungen des Rades (1) zu steuernde Steuerung (37) vorgesehen ist.

14. Vorrichtung nach Anspruch 2 bis 13, **dadurch gekennzeichnet,** daß die Steuerung (37) mit einem eine Relativbewegung der Kupplung (13) gegenüber dem Rad (1) steuernden Steuerungsanteil versehen ist.

15. Vorrichtung nach Anspruch 13 und 14, **dadurch gekennzeichnet**, daß die Steuerung (37) mit einem Mikroprozessor (40) verbunden ist.

## Claims

1. Apparatus for producing mouldings having heating means heating a thermoplastic preform, a mould performing the moulding of the preform and conveying means conveying the preform to the heating means from the latter to the mould, said conveying means being constructed as a wheel (1) mounted in rotary manner in its centre point (7) and to which is fixed a clutch (13) gripping the preform (16) and both the heating means (2) and the mould (3) are positioned on a path traversed by the clutch (13) and on which the clutch (13) guides the preform (15) to the mould (3) and also the finished moulding (29) from the mould (3) to a delivery station (4) receiving the same,
**characterized** in that
the wheel (1) is controlled to a constant peripheral speed.

2. Apparatus according to claim 1,
**characterized** in that
the clutch (13) is arranged in movable manner on the wheel (1).

3. Apparatus according to claim 1 or 2,
**characterized** in that
the clutch (13) has a control means (37) controlling its movements relative to the wheel (1).

4. Apparatus according to claim 2 and 3,
**characterized** in that
the clutch (13), as a function of the processing phase taking place, leads or lags relative to the wheel (1).

5. Apparatus according to claim 2 to 4,
**characterized** in that
the clutch (13) lags relative to the wheel (1) in the vicinity of the heating means (2).

6. Apparatus according to claim 2 to 5,
**characterized** in that
the clutch (13) leads in an area (22) located between the heating means (2) and the mould (3).

7. Apparatus according to claim 2 to 6,
**characterized** in that
the clutch (13) lags relative to the wheel (1) in the vicinity of the mould (3).

8. Apparatus according to claim 2 to 7,
**characterized** in that
the clutch (13) leads relative to the wheel (1) in an area (30) located between the mould (3) and the delivery station (4).

9. Apparatus according to claim 1 to 8,
**characterized** in that
in the vicinity of a transfer station (17) delivering the preform (16) to the clutch (13), the latter rotates with a peripheral speed adapted to the wheel (1).

10. Apparatus according to claim 2 to 9,
**characterized** in that
in an area (19) located between the transfer station (17) and the heating means (2) the clutch (13) leads the wheel (1).

11. Apparatus according to claim 1 to 10,
**characterized** in that
in the heating means (2) is provided a heating path (20) traversed by the preform (16) and on which is provided a heat transfer selectively heating the preform (16) and at whose end a temperature of the preform (16) allowing its moulding is reached.

12. Apparatus according to claim 1 to 11,
**characterized** in that
during the moulding of the preform (16) the latter is stationary in the mould (3).

13. Apparatus according to claim 1 to 12,
**characterized** in that
a control means (37) controlling the movements of the wheel (1) is provided.

14. Apparatus according to claim 2 to 13,
**characterized** in that
the control means (37) is provided with a control component controlling a relative movement of the clutch (13) with respect to the wheel (1).

15. Apparatus according to claim 13 and 14,
**characterized** in that
the control means (37) is connected to a microprocessor (40).

## Revendications

1. Dispositif pour la fabrication de pièces moulées, comportant un moyen de chauffage qui échauffe une ébauche en matériau thermodurcissable, un moule qui assure la mise en forme de l' ébauche ainsi qu'un dispositif de transport qui amène l'ébauche au moyen de chauffage puis la transporte de ce dernier jusqu'au moule, lequel dispositif de transport est agencé sous la forme d'une roue (1) qui est montée tournante en son centre (7) et sur laquelle est fixé un moyen d'accouplement (13) qui saisit l'ébauche (16), aussi bien le moyen de chauffage (2) que le moule (3) étant disposés sur un trajet qui est parcouru par le moyen d'accouplement (13) et sur lequel l'accouplement (13) amène aussi bien l'ébauche (16) jusqu'au moule (3) que la pièce moulée (29) finie du moule (13) jusqu'à un poste de sortie (4) où ladite pièce finie est prise en charge, caractérisé par le fait que la roue (1) est entrainée avec une vitesse périphérique constante.

2. Dispositif selon la revendication 1, caractérisé par le fait que le moyen d'accouplement (13) est monté mobile sur la roue (1).

3. Dispositif selon la revendication 1 ou la revendication 2, caractérisé par le fait que le moyen d'accouplement (13) comporte un dispositif de commande (37) qui contrôle ses déplacements par rapport à la roue (1).

4. Dispositif selon les revendications 2 et 3, caractérisé par le fait que, en fonction de la phase d'usinage à réaliser, le moyen d'accouplement (13) est en avance ou en retard par rapport à la roue (1).

5. Dispositif selon les revendications 2 à 4, caractérisé par le fait que, dans la région du moyen de chauffage (2), le moyen d'accouplement (13) est en retard par rapport à la roue (1).

6. Dispositif selon les revendications 2 à 5, caractérisé par le fait que, dans une zone située entre le moyen de chauffage (2) et le moule (3), le moyen d'accouplement (13) est en avance par rapport à la roue (1).

7. Dispositif selon les revendications 2 à 6, caractérisé par le fait que, dans la région du moule (3), le moyen d'accouplement (13) est en retard par rapport à la roue (1).

8. Dispositif selon les revendications 2 à 7, caractérisé par le fait que, dans une zone (30) située entre le moule (3) et le poste de sortie (4), le moyen d'accouplement (13) est en avance par rapport à la roue (1).

9. Dispositif selon les revendications 1 à 8, caractérisé par le fait que, dans la région d'un poste de transfert (17) qui assure le transfert l'ébauche (16) dans le moyen d'accouplement (13), le moyen d'accouplement (13) tourne avec une vitesse périphérique adaptée à la roue (1).

10. Dispositif selon les revendications 2 à 9, caractérisé par le fait que, dans une zone (19) située entre le poste de transfert (17) et le moyen de chauffage (2), le moyen d'accouplement (13) est en avance par rapport à la roue (1).

11. Dispositif selon les revendications 1 à 10, caractérisé par le fait qu'il est prévu dans le moyen de chauffage (2) un parcours de chauffage (20) qui est suivi par l'ébauche (16) et sur lequel il est prévu un transfert de chaleur qui chauffe l'ébauche de manière sélective et à l'extrémité duquel l'ébauche (16) atteint sa température permettant sa mise en forme.

12. Dispositif selon les revendications 1 à 11, caractérisé par le fait que pendant une opération de formage de l'ébauche (16), ladite ébauche (16) repose dans le moule (3).

13. Dispositif selon les revendications 1 à 12, caractérisé par le fait qu'il est prévu une commande (37) qui commande les déplacements de la roue (1).

14. Dispositif selon les revendications 2 à 13, caractérisé par le fait que la commande (37) est pourvue d'un module de commande qui commande un déplacement de l'accouplement (13) par rapport à la roue (1).

15. Dispositif selon les revendications 13 et 14, caractérisé par le fait que la commande (37) est reliée à un micro-processeur (40).
